(19) Europäisches Patentamt
European Patent Office
Office européen des brevets

(11) EP 2 722 355 A2

(12) EUROPEAN PATENT APPLICATION
published in accordance with Art. 153(4) EPC

(43) Date of publication:
23.04.2014 Bulletin 2014/17

(21) Application number: 12802092.2

(22) Date of filing: 20.06.2012

(51) Int Cl.:
*C08J 5/18* (2006.01) *C08K 5/22* (2006.01)
*C08K 5/32* (2006.01) *C08L 1/12* (2006.01)
*G02B 1/04* (2006.01)

(86) International application number:
PCT/KR2012/004869

(87) International publication number:
WO 2012/177043 (27.12.2012 Gazette 2012/52)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 20.06.2011 KR 20110059697
19.06.2012 KR 20120065581

(71) Applicant: SK Innovation Co., Ltd.
Seoul 110-110 (KR)

(72) Inventors:
- KIM, Won Yeob
  Daejeon 302-772 (KR)
- IM, Min Joung
  Busan 614-010 (KR)
- LEE, Seung Eon
  Daejeon 305-712 (KR)
- KIM, Myoung Lae
  Daejeon 305-313 (KR)
- CHO, Yong Gyun
  Daejeon 305-707 (KR)
- LEE, Sang Yeup
  Daejeon 305-712 (KR)
- KIM, Ki Yup
  Seoul 136-726 (KR)

(74) Representative: Stolmár & Partner
Blumenstraße 17
80331 München (DE)

# (54) OPTICAL FILM

(57) The present invention relates to a cellulose acetate film used for optical compensation and a retardation enhancer used therein, and relates to a cellulose acetate film which has a high retardation value in the thickness direction (Rth).

EP 2 722 355 A2

## Description

[Technical Field]

The present invention relates to an optical film used for optical compensation, and more particularly to a cellulose acetate film having high retardation in a thickness direction (Rth).

Also, the present invention relates to an optical compensation sheet, a polarizing plate, an optical filter for a three dimensional image, and a liquid crystal display, by using the optical film.

[Background Art]

A cellulose acetate film has strong strength and flame retardancy, and thus, is used in various kinds of pictures or optical materials. The cellulose acetate film has a low optical anisotropy as compared with other polymer films, and thus provides relatively low retardation. Therefore, the cellulose acetate film has been used in a polarizing plate and the like.

US Patent Laid-Open Publication No. 2008/0173215 discloses a cellulose acetate film having excellent light resistance, and Korean Patent Laid-open Publication No. 2011-0075980 discloses a cellulose acetate film including a retardation improver.

In a vertical alignment (VA) mode, transparent electrodes are formed on upper and lower plates. Since polarizing plates are attached on outside surfaces of the upper and lower plates such that optical axes thereof are perpendicular to each other, initial alignment directions are perpendicular to each other while an electric field is not applied thereto, resulting in completely dark state. If the electric field is applied thereto, liquid crystal directors are appropriately rearranged to thereby transmit the light therethrough. The optical compensation film of this VA mode liquid crystal display requires a high anisotropy, that is, high retardation.

Meanwhile, US Patent Laid-Open Publication No. 2010/0208181 discloses a cellulose acetate film containing a compound enabling a high contrast even at a wide viewing angle in a VA mode, but still requires a cellulose acetate film having excellent optical characteristics.

[Technical Problem]

An embodiment of the present invention is to provide an optical film having a high retardation value in a thickness direction. More specifically, an embodiment of the present invention is directed to providing an optical film, capable of being used in a VA mode liquid crystal display and improving viewing angle and contrast characteristics of a VA mode LCD panel.

In addition, an embodiment of the present invention is to provide a retardation additive for satisfying these optical characteristics.

Further, an embodiment of the present invention is to provide an optical compensation sheet, an optical filter for a three dimensional image, a polarizing plate, and a liquid crystal display, by using the optical film.

[Technical Solution]

The present invention relates to an optical film having excellent optical properties, the optical film including at least one additive selected from compounds of Chemical Formula 1 below.

In one general aspect, an optical film includes at least one additive selected from compounds of Chemical Formula 1 below:

[Chemical Formula 1]

$$Ar-[Q]_m$$

In Chemical Formula 1,

Ar is (C6-C20)aryl or (C3-C20)heteroaryl, provided that OR (here, R is hydrogen or (C1-C10)alkyl) is substituted at least one ortho position of Q;

Q is

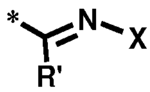 ;

R' is hydrogen or (C1-C10)alkyl;

X is

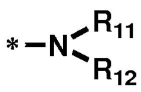, 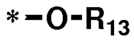, or 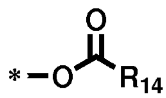;

$R_{11}$, $R_{12}$, $R_{13}$, and $R_{14}$ each are independently hydrogen, (C1-C10)alkyl, (C1-C10)alkylcarbonyl, or

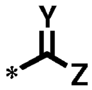;

$R_{11}$ and $R_{12}$ may be linked to each other via substituted or unsubstituted (C2-C10)alkylene to thereby form a ring; the alkylene may be further substituted with (C1-C7)alkyl; at least one of carbon atoms of the alkylene may be further substituted with at least one heteroatom selected from N, O, and S;

Y is O or S;

Z is hydrogen,

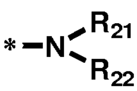, 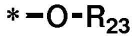, or 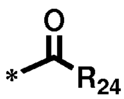;

$R_{21}$, $R_{22}$, $R_{23}$ and $R_{24}$ each are independently hydrogen, (C1-C10)alkyl, (C3-C20)cycloalkyl, amine group; $R_{21}$ and $R_{22}$ may be linked to each other via (C3-C10)alkylene substituted or unsubstituted with (C1-C7)alkyl to thereby form a ring; and at least one of carbon atoms of the alkylene may be further substituted with at least one heteroatom selected from N, O, and S;

Ar may be further substituted with at least one selected from (C1-C7)alkyl, (C1-C7)alkoxy, (C3-C20)cycloalkyl, (C1-C7)alkylcarbonyl, (C3-C20)cyclocarbonyl, (C1-C7)alkylsulfanyl, (C3-C20)cyclosulfanyl, (C1-C7)alkylsulfinyl, (C3-C20)cyclosulfinyl, (C1-C7)alkylsulfonyl, (C3-C20)cyclosulfonyl, (C1-C7)alkylcarbonylimine, (C3-C20)cycloalkylcarbonylimine, (C1-C7)alkylsulfanylimine, (C3-C20)cycloalkylsulfanylimine, halogen, nitro, cyano, hydroxy, amino, (C2-C7)alkenyl, (C3-C20)cycloalkyl, and 5- to 7-membered heterocycloalkyl including at least one atom selected from N, O, and S; and

m is an integer of 1 to 10.

The compound of Chemical Formula 1 may be represented by a compound of Chemical Formula 2 below.

[Chemical Formula 2]

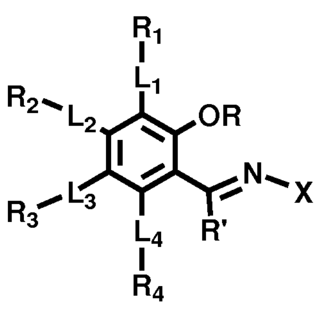

In Chemical Formula 1,

$L_1$ to $L_4$ each are independently a single bond, or selected from N, O, S, C=O, S=O, O=S=O, -NH-C(O)-, and -NH-C(S)-;

$R_1$ to $R_4$ each are independently hydrogen, (C1-C10)alkyl, (C1-C10)alkoxy, (C3-C20)cycloalkyl,

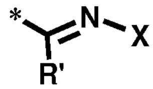

or 5- to 7-membered heterocycloalkyl including at least one atom selected from N, O, and S;

R and R' each are independently hydrogen or (C1-C10)alkyl;

X is

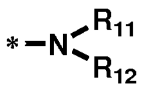, 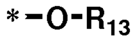, or 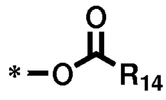;

$R_{11}$, $R_{12}$, $R_{13}$, and $R_{14}$ each are independently hydrogen, (C1-C10)alkyl, (C1-C10)alkylcarbonyl, or

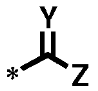;

$R_{11}$ and $R_{12}$ may be linked to each other via substituted or unsubstituted (C4-C10)alkylene to thereby form a ring; the alkylene may be further substituted with (C1-C7)alkyl; and at least one of the carbon atoms of the alkylene may be further substituted with at least one heteroatom selected from N,O, and S;

Y is O or S;

Z is hydrogen,

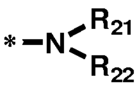, 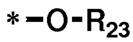, or 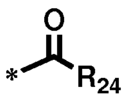;

$R_{21}$, $R_{22}$, $R_{23}$ and $R_{24}$ each are independently hydrogen, (C1-C10)alkyl, (C3-C20)cycloalkyl, or amine group; $R_{21}$ and $R_{22}$ may be linked to each other via (C3-C10)alkylene substituted or unsubstituted with (C1-C7)alkyl to thereby form a ring; and at least one of carbon atoms of the alkylene may be further substituted with at least one heteroatom selected from N, O, and S;

alkyl, alkoxy, cycloalkyl, and heterocycloalkyl of $R_1$ to $R_4$ and alkyl of R and R' may be further substituted with at least one selected from (C1-C7)alkyl, halogen, nitro, cyano, hydroxy, amino, (C2-C7)alkenyl, (C3-C20)cycloalkyl, and 5- to 7- membered heterocycloalkyl including at least one selected from N, O, and S; and

$R_1$ to $R_4$ each may be linked to an adjacent substituent via (C3-C10)alkylene substituted or unsubstituted with (C1-C7)alkyl to thereby form an aliphatic ring.

The Chemical Formula 2 may be represented by any one of Chemical Formulas 3 to 6 below.

[Chemical Formula 3]

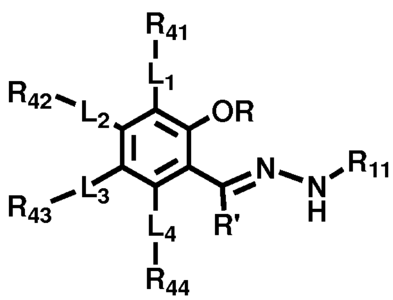

[Chemical Formula 4]

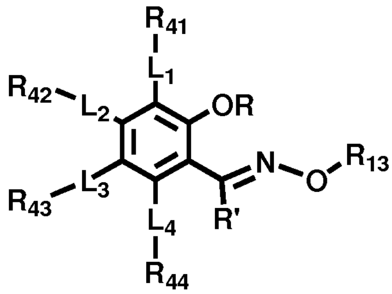

[Chemical Formula 5]

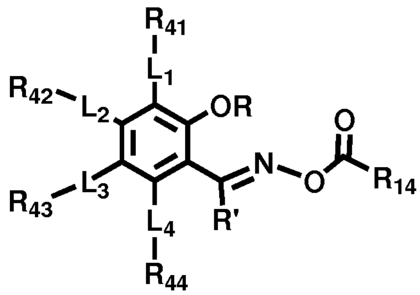

[Chemical Formula 6]

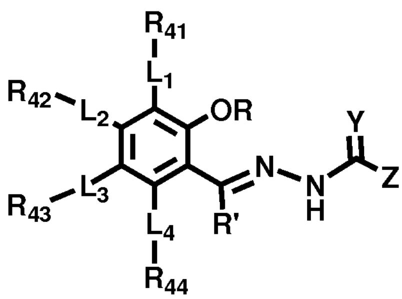

In Chemical formulas 2 to 5,

$L_1$ to $L_4$ each are independently a single bond, or selected from N, O, S, C=O, S=O, O=S=O, -NH-C(O)-, and -NH-C(S)-;

$R_{41}$ to $R_{44}$ each are independently hydrogen, (C1-C10)alkyl, (C1-C10)alkoxy, (C3-C20)cycloalkyl, (C2-C7)alkenyl,

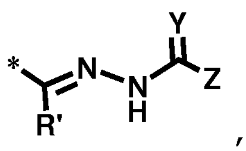

or 5- to 7- membered heterocycloalkyl including at least one atom selected from N, O, and S;

Y is O or S;

Z is hydrogen,

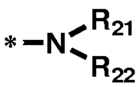,
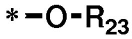 or
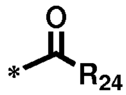;

$R_{21}$, $R_{22}$, $R_{23}$, and $R_{24}$ each are independently hydrogen, (C1-C10)alkyl, (C3-C20)cycloalkyl, or amino group; $R_{21}$ and $R_{22}$ may be linked to each other via (C3-C10)alkylene substituted or unsubstituted with (C1-C7)alkyl to thereby form a ring; and at least one of carbon atoms of the alkylene may be further substituted with at least one heteroatom selected from N, O, and S;

R and R' each are independently hydrogen or (C1-C10)alkyl; and

alkyl, alkoxy, cycloalkyl, alkenyl, and heterocycloalkyl of $R_{41}$ to $R_{44}$ and alkyl of R and R, may be further substituted with at least one selected from (C1-C7)alkyl, halogen, nitro, cyano, hydroxy, amino, (C2-C7)alkenyl, (C3-C20)cycloalkyl, and 5- to 7- membered heterocycloalkyl including at least one selected from N, O, and S.

More specifically, the compound of Chemical Formula 1 may be selected from the structures below, but is not limited thereto:

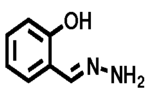
1
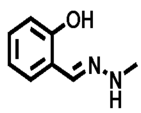
2
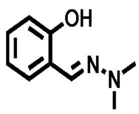
3
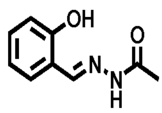
4
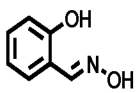
5
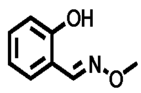
6

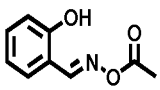
7
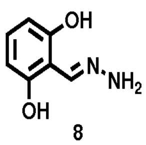
8
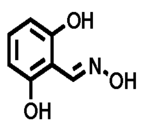
9
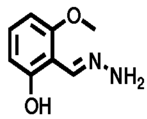
10
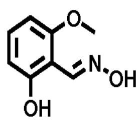
11
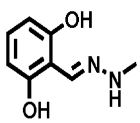
12

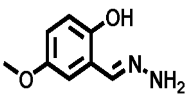
13
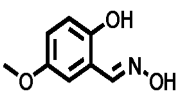
14
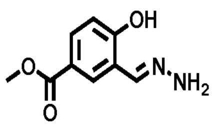
15
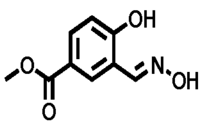
16
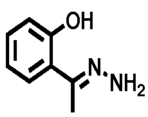
17

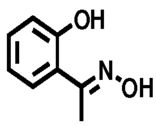
18
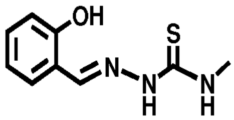
19
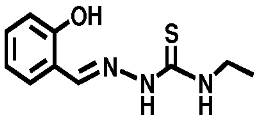
20
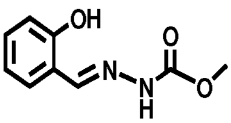
21

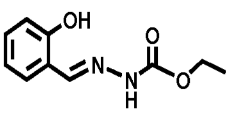
22
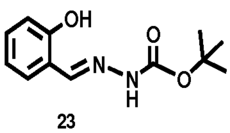
23
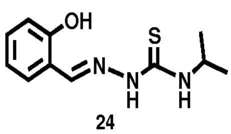
24
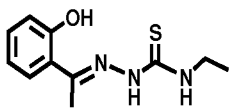
25

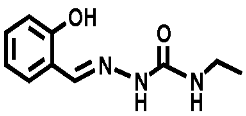
26
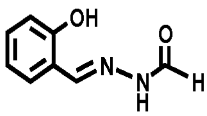
27
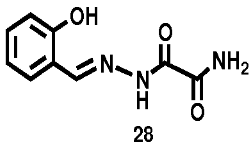
28
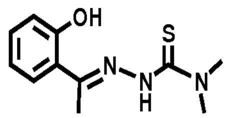
29

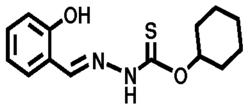
30

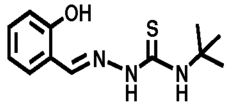
31

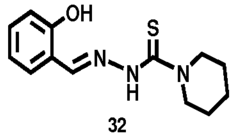
32

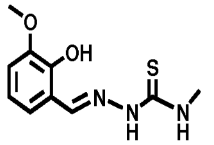
33

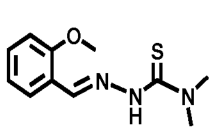
34

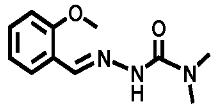
35

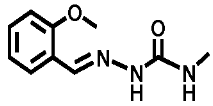
36

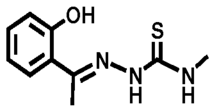
37

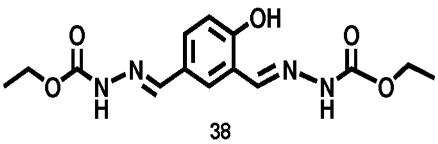
38

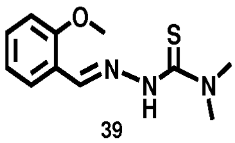
39

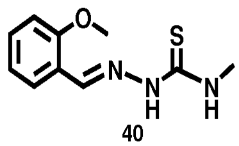
40

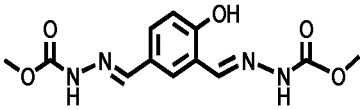
41

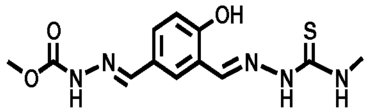
42

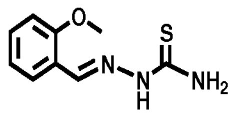
43

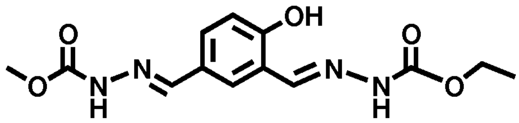
44

In another general aspect, an optical film includes an aromatic ring including at least two substituents, wherein at least two substituents include a compound of forming intramolecular hydrogen bonding.

The compound may form an analogous aromatic ring by intramolecular hydrogen bonding. The optical film may have Rth(λ) satisfying Formulas (I) and (II) below.

$$(\text{I})\ 50 \leq Rth(550) \leq 500$$

$$(\text{II})\ Rth(700)/Rth(550) > 1.0$$

In Formulas above, Rth(λ) is a retardation value (unit: nm) in a thickness direction of the film at a wavelength, λnm.

The optical film may be a cellulose acetate film.

In still another aspect, a composition for an optical film includes, as a retardation additive, at least one selected from compounds of Chemical Formula 1 below in 1~15 parts by weight based on 100 parts by weight of a base resin.

The composition may further include any one or two or more additives selected from a UV inhibitor, fine particles, a plasticizer, a deterioration inhibitor, a stripping agent, an infrared absorber, and an optically anisotropic controller.

In still another aspect, an optical film is manufactured by using the composition for an optical film.

The optical film may be used in an optical compensation sheet, an optical filter for a three dimensional image, a polarizing plate, and a liquid crystal display, and may preferably be a liquid crystal display.

[Advantageous Effects]

The optical film according to the present invention can improve optical characteristics due to a high retardation value in a thickness direction.

Further, the optical film according to the present invention can improve the viewing angle and contrast of a VA

mode LCD panel due to high retardation.

Further, the optical compensation sheet, the optical filter for a three dimensional image, the polarizing plate, and the liquid crystal display, manufactured by using the optical film according to the present invention, can have high contrast even at a wide viewing angle due to high retardation.

[Best Mode]

The present invention provides an optical film including at least one selected from compounds of Chemical Formula 1 below.

[Chemical Formula 1]

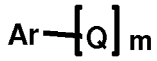

In Chemical Formula 1,

Ar is (C6-C20)aryl or (C3-C20)heteroaryl, provided that OR (here, R is hydrogen or (C1-C10)alkyl) is substituted at least one ortho position of Q;

Q is

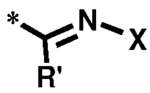 ;

R' is hydrogen or (C1-C10)alkyl;

x is

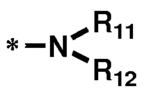 , 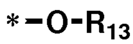 , or 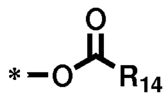 ;

$R_{11}$, $R_{12}$, $R_{13}$, and $R_{14}$ each are independently hydrogen, (C1-C10)alkyl, (C1-C10)alkylcarbonyl, or

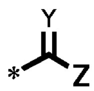 ;

$R_{11}$ and $R_{12}$ may be linked to each other via substituted or unsubstituted (C4-C10)alkylene to thereby form a ring; the alkylene may be further substituted with (C1-C7)alkyl; and at least one of the carbon atoms of the alkylene may be further substituted with at least one heteroatom selected from N, O, and S;

Y is O or S;

Z is hydrogen,

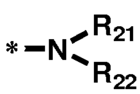 , 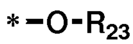 , or 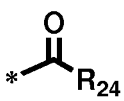 ;

$R_{21}$, $R_{22}$, $R_{23}$ and $R_{24}$ each are independently hydrogen, (C1-C10)alkyl, (C3-C20)cycloalkyl, or amino group; $R_{21}$ and $R_{22}$ may be linked to each other via (C3-C10)alkylene substituted or unsubstituted with (C1-C7)alkyl to thereby form a ring; and at least one of the carbon atoms of the alkylene may be further substituted with at least one heteroatom selected from N, O, and S;

Ar may be further substituted with at least one selected from (C1-C7)alkyl, (C1-C7)alkoxy, (C3-C20)cycloalkyl, (C1-C7)alkylcarbonyl, (C3-C20)cyclocarbonyl, (C1-C7)alkylsulfanyl, (C3-C20)cyclosulfanyl, (C1-C7)alkylsulfinyl, (C3-C20)cyclosulfinyl, (C1-C7)alkylsulfonyl, (C3-C20)cyclosulfonyl, (C1-C7)alkylcarbonylimine, (C3-C20)cycloalkylcarbonylimine, (C1-C7)alkylsulfanylimine, (C3-C20)cycloalkylsulfanylimine, halogen, nitro, cyano, hydroxy, amino, (C2-C7)alkenyl, (C3-C20)cycloalkyl, and 5- to 7-membered heterocycloalkyl including at least one atom selected from N, O, and S; and

m is an integer of 1 to 10.

In the compound of Chemical Formula 1 as a retardation additive of the present invention, -OR is substituted at the ortho position with respect to (R')C=N-X, which is a substituent of aryl or heteroaryl, to thereby be positioned adjacently to each other, so that the compound is as effective as having two aromatic rings due to the intramolecular hydrogen bonding on the molecular structure in spite of having one aromatic ring, and thus, the retardation of the optical film (a retardation value (Rth) in a film thickness direction) can be further increased, resulting in improving the viewing angle and contrast.

Moreover, a compound is as effective as having a plurality of aromatic rings by increasing the length of the X substituent of (R')C=N-X, which is a substituent of aryl or heteroaryl in Chemical Formula 1, is synthesized, so that the retardation value can be further increased.

Therefore, the cellulose acetate film according to the present invention may be suitable for a liquid crystal display.

As described herein, 「alkyl」, 「alkoxy」, and substituents containing other 「alkyl」 moieties include both linear and branched species, and 「cycloalkyl」 may include monocyclic hydrocarbon as well as polycyclic hydrocarbon such as substituted or unsubstituted adamantyl or substituted or unsubstituted (C7-C20)bicycloalkyl.

Specifically, the compound of Chemical Formula 1 according to an embodiment of the present invention may be represented by a compound of Chemical Formula 2 below.

[Chemical Formula 2]

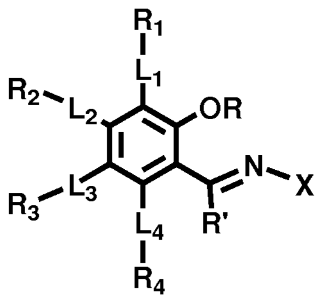

In Chemical Formula 1,

$L_1$ to $L_4$ each are independently a single bond, or selected from N, O, S, C=O, S=O, O=S=O, -NH-C(O)-, and -NH-C(S)-;

$R_1$ to $R_4$ each are independently hydrogen, (C1-C10)alkyl, (C1-C10)alkoxy, (C3-C20)cycloalkyl,

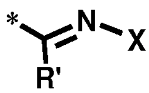

or 5- to 7-membered heterocycloalkyl including at least one atom selected from N, O, and S;

R and R' each are independently hydrogen or (C1-C10)alkyl;

X is

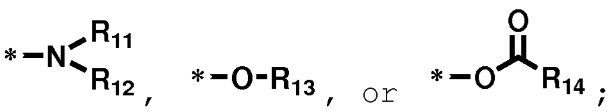

, , or ;

$R_{11}$, $R_{12}$, $R_{13}$ and $R_{14}$ each are independently hydrogen, (C1-C10)alkyl, (C1-C10)alkylcarbonyl, or

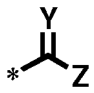 ;

$R_{11}$ and $R_{12}$ may be linked to each other via substituted or unsubstituted (C4-C10)alkylene to thereby form a ring; the alkylene may be further substituted with (C1-C7)alkyl; and at least one of the carbon atoms of the alkylene may be further substituted with at least one heteroatom selected from N, O, and S;

Y is O or S;

Z is hydrogen,

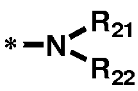 , 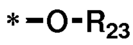 , or 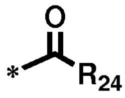 ;

$R_{21}$, $R_{22}$, $R_{23}$, and $R_{24}$ each are independently hydrogen, (C1-C10)alkyl, (C3-C20)cycloalkyl, or amino group; $R_{21}$ and $R_{22}$ may be linked to each other via (C3-C10)alkylene substituted or unsubstituted with (C1-C7)alkyl to thereby form a ring; and at least one of the carbon atoms of the alkylene may be further substituted with at least one heteroatom selected from N, O, and S;

alkyl, alkoxy, cycloalkyl, and heterocycloalkyl of $R_1$ to $R_4$ and alkyl of R and R' may be further substituted with at least one selected from (C1-C7)alkyl, halogen, nitro, cyano, hydroxy, amino, (C2-C7)alkenyl, (C3-C20)cycloalkyl, and 5- to 7- membered heterocycloalkyl including at least one selected from N, O, and S; and

$R_1$ to $R_4$ each may be linked to an adjacent substituent via (C3-C10)alkylene substituted or unsubstituted with (C1-C7)alkyl to thereby form an aliphatic ring.

The compound of Chemical Formula 2, which is a retardation additive used in the optical film of the present invention, may be represented by any one of Chemicals 3 to 6 below.

[Chemical Formula 3]

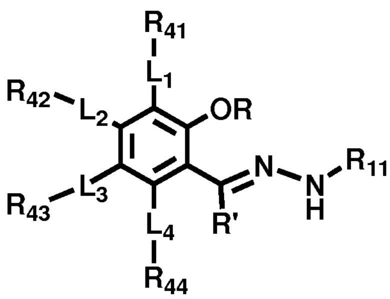

[Chemical Formula 4]

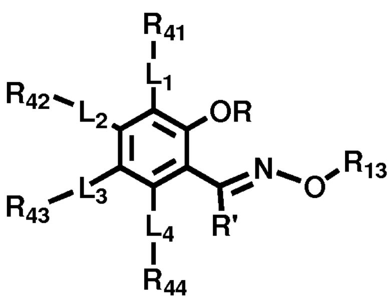

[Chemical Formula 5]

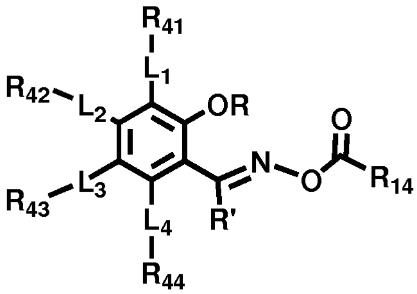

[Chemical Formula 6]

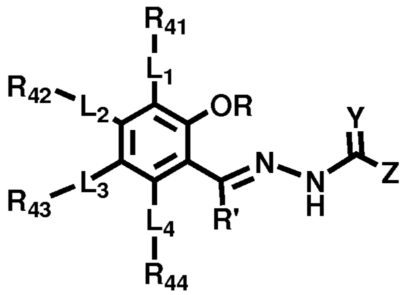

In Chemical formulas 2 to 5,

$L_1$ to $L_4$ each are independently a single bond, or selected from N, O, S, C=O, S=O, O=S=O, -NH-C(O)-, and -NH-C(S)-;

$R_{41}$ to $R_{44}$ each are independently hydrogen, (C1-C10)alkyl, (C1-C10)alkoxy, (C3-C20)cycloalkyl, (C2-C7)alkenyl,

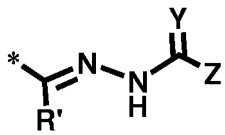

or 5- to 7- membered heterocycloalkyl including at least one atom selected from N, O, and S;

Y is O or S;

Z is hydrogen,

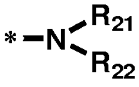, 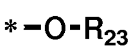 or 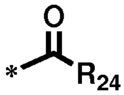;

$R_{21}$, $R_{22}$, $R_{23}$ and $R_{24}$ each are independently hydrogen, (C1-C10)alkyl, (C3-C20)cycloalkyl, or amine group; $R_{21}$ and $R_{22}$ may be linked to each other via (C3-C10)alkylene substituted or unsubstituted with (C1-C7)alkyl to thereby form a ring; and at least one of carbon atoms of the alkylene may be further substituted with at least one heteroatom selected from N, O, and S;

R and R' each are independently hydrogen or (C1-C10)alkyl; and

alkyl, alkoxy, cycloalkyl, alkenyl, and heterocycloalkyl of $R_{41}$ to $R_{44}$ and alkyl of R and R' may be further substituted with at least one selected from (C1-C7)alkyl, halogen, nitro, cyano, hydroxy, amino, (C2-C7)alkenyl, (C3-C20)cycloalkyl, and 5- to 7- membered heterocycloalkyl including at least one selected from N, O, and S.

Preferably, in Chemical Formulas 3 to 6 according to the present invention, $L_1$ to $L_4$ each are independently

selected from a single bond, O, and C=O;

$R_{41}$ to $R_{44}$ each are independently selected from hydrogen, (C1-C10)alkyl, (C1-C10)alkoxy, or ;

Y is O or S;

Z is selected from hydrogen,

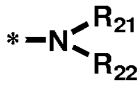 ,

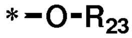

or

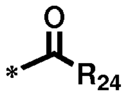 ;

R' is hydrogen or (C1-C10)alkyl;

$R_{21}$, $R_{22}$, $R_{23}$, and $R_{24}$ each are independently hydrogen, (C1-C10)alkyl, (C3-C20)cycloalkyl, or amine group; $R_{21}$ and $R_{22}$ may be linked to each other via (C3-C10)alkylene substituted or unsubstituted with (C1-C7)alkyl to thereby form a ring; and at least one of carbon atoms of the alkylene may be further substituted with at least one heteroatom selected from N, O, and S; and

$R_5$ is selected from hydrogen and (C1-C10)alkyl.

More specifically, Chemical Formula 1 of the present invention may be selected from the structures below, but is not limited thereto.

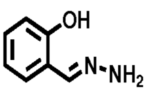
1

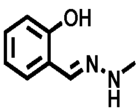
2

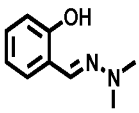
3

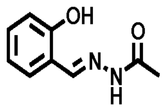
4

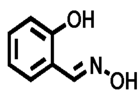
5

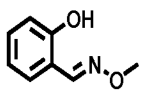
6

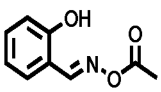
7

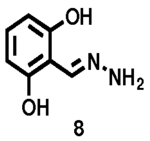
8

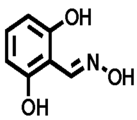
9

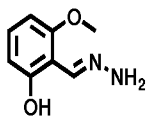
10

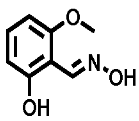
11

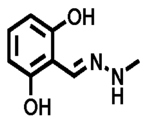
12

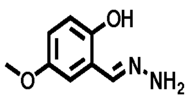
13

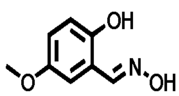
14

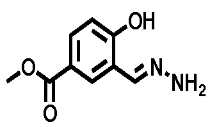
15

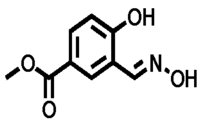
16

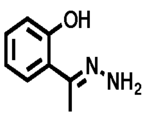
17

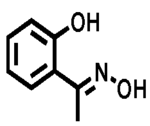
18

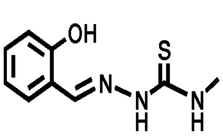
19

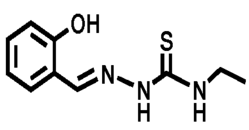
20

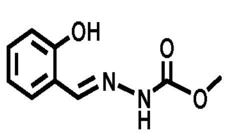
21

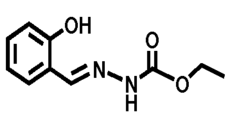
22

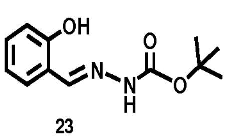
23

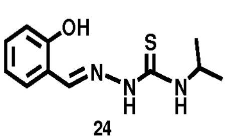
24

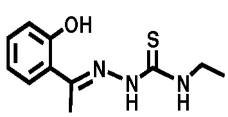
25

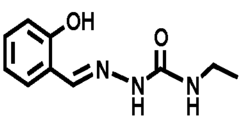
26
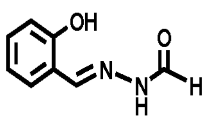
27
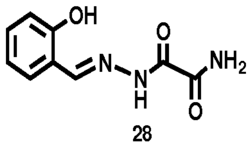
28
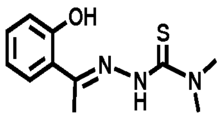
29

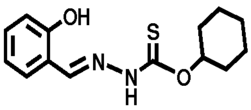
30
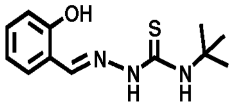
31
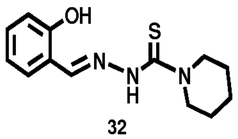
32
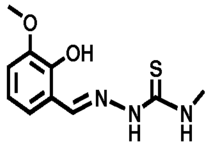
33

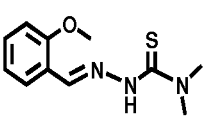
34
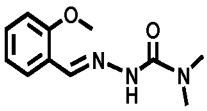
35
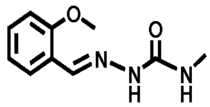
36
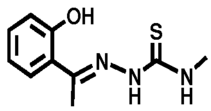
37

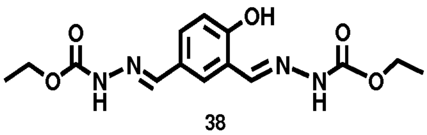
38
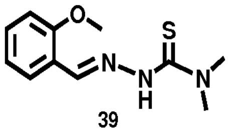
39
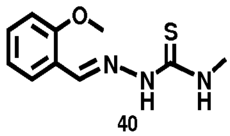
40

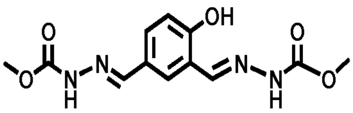
41
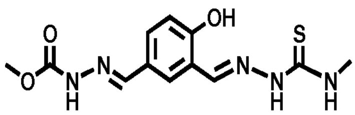
42
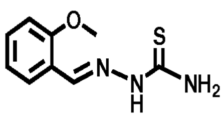
43

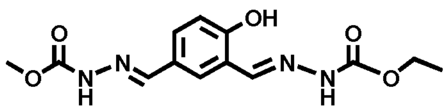
44

Chemical Formula 1 according to an embodiment of the present invention may include an aromatic ring containing at least two substituents, and at least two substituents may include a compound forming intramolecular hydrogen bonding.

Preferably, the compound according to an embodiment of the present invention may form an analogous aromatic ring by the intramolecular hydrogen bonding.

More specifically, the present invention includes an aromatic ring containing at least two substituents, and an analogous aromatic ring is formed by a compound capable of intramolecular hydrogen bonding, preferably intramolecular hydrogen bonding, due to at least two substituents as above.

In the present invention, the analogous aromatic ring has a cyclohexadiene backbone, and this analogous aromatic ring may be formed by the intramolecular hydrogen bonding of the substituents included in the aromatic ring of the present invention.

Any substituent forming the analogous aromatic ring may be used as long as it has a structure capable of hydrogen bonding, and examples thereof may include hydroxy, oxime, hydrazine, semicarbazone, and the like.

More preferably, the present invention provides an optical film including a compound having one aromatic ring; having an imine group substituted or unsubstituted on the aromatic group; and having substituents capable of hydrogen bonding with nitrogen of the imine group at the ortho position with respect to the imine group.

The imine group of the present invention means that carbon and nitrogen are linked to each other by double bonding, and hydrogen or a substituent may be linked to carbon and nitrogen of the imine group.

Therefore, the compound of the present invention has the substituents capable of hydrogen bonding on the aromatic group, so that the intramolecular hydrogen bonding of the substituents function as another aromatic ring, resulting in increasing retardation of the optical film.

The compound of the present invention may be used as a retardation additive for the optical film.
The optical film according to an embodiment of the present invention may satisfy Formulas (I) and (II) below:

$$(\mathrm{I})\ 50 \leq Rth(550) \leq 500$$

$$(\mathrm{II})\ Rth(700)/Rth(550) > 1.0$$

In Formulas above, Rth(λ) is a retardation value (unit: nm) in a film thickness direction at a wavelength, λnm.
In addition, the present invention may be preferably a cellulose acetate film. Here, the cellulose acetate film may have a substitution degree of 2.7 to 3.0, which is measured by the ASTM D-817-91.
The compound of Chemical Formula 1 of the present invention may be prepared as shown in Reaction Scheme 1, and the preparing method below does not limit the method for preparing the compound of Chemical Formula 1. Therefore, modification of the preparing method below will be obvious to those skilled in the art.

[Reaction Scheme 1]

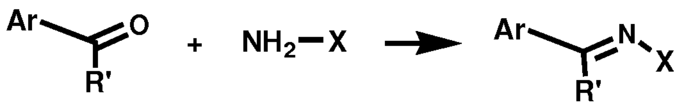

In Reaction Scheme 1,
**[0111]** Ar, R', and X have the same meanings as those defined in Chemical Formula 1 above.
In addition, the present invention provides a composition for an optical film comprising, as a retardation additive, at least one selected from compounds of Chemical Formula 1 above in 1~15 parts by weight based on 100 parts by weight of a base resin.
The base resin may mean a basic resin usually used for the optical film, and may be preferably a cellulose acetate film having various substitution degrees.
One or two or more additives selected from a UV inhibitor, fine particles, a plasticizer, a deterioration inhibitor, a stripping agent, an infrared absorber, and an optically anisotropic controller may be further added to the composition according an embodiment of the present invention.
Hereinafter, respective constitutions of the present invention will be described in more detail.
The optical film of the present invention may be a common optical film, but preferably a cellulose acetate film. First, the cellulose acetate film will be described. The cellulose acetate film according to an embodiment of the present invention has a density of about 1.2~1.35, but is not limited thereto.
Cellulose acetate is ester of cellulose and acetic acid, and all or some of hydrogen atoms of hydroxyl groups at the positions 2, 3, and 6 of a glucose unit constituting cellulose are substituted by acetyl groups. The substitution degree of cellulose acetate is not limited, but is preferably 2.7 or higher, and more preferably 2.7 ~ 3.0. The substitution degree may be measured according to the ASTM D-817-91.
In the present invention, the molecular weight range of cellulose acetate is not limited, but the weight average molecular weight thereof is preferably in the range of 200,000 ~ 350,000. In addition, the molecular weight distribution of cellulose acetate, Mw/Mn, (Mw is weight average molecular weight and Mn is number average molecular weight), is preferably 1.4 ~ 1.8, and more preferably 1.5 ~ 1.7.
The cellulose acetate film is preferably manufactured by a solvent cast method of using a cellulose acetate dope solution. According to the solvent cast method, the film is formed by casting a solution (dope) where cellulose acetate is dissolved in a solvent on a supporter and then evaporating the solvent.
As a raw material of the cellulose acetate dope solution, cellulose acetate particles are preferably used. Here, preferably, 90wt% or higher of the cellulose acetate particles have an average particle size of 0.5 to 5 mm. In addition, preferably, 50 wt% or higher of the cellulose acetate particles used have an average particle size of 1 to 4 mm.
The cellulose acetate particles preferably have a shape close to a sphere if possible. The cellulose acetate particles are dried such that they have a moisture content of 2 wt% or lower, and more preferably 1 wt% or lower, which are then used for the dope solution.
Then, the additive used in the cellulose acetate film will be described.
In the cellulose acetate solution (dope) used in the solvent cast method, various kinds of additives according

to the uses of respective preparing processes, for example, a plasticizer, a UV inhibitor, a deterioration inhibitor, fine particles, a stripping agent, an infrared absorber, an optically anisotropic controller, and the like may be added. Specific kinds of these additives are not limited as long as they are usually used in the art, and the contents thereof may be preferably in the range in which physical properties of the film are not deteriorated. The time in which the additive is added is determined depending on the kind of additive. The additive may be added at the last stage of preparing the dope.

The plasticizer is used for enhancing mechanical strength of the film, and in the case of using the plasticizer, the time for drying the film may be shortened. Any one plasticizer may be used without limitation as long as it is usually used. Examples thereof may include phosphoric acid ester, carboxylic acid ester selected from phthalic acid ester and citric acid ester, and the like. Examples of phosphoric acid ester may include triphenyl phosphate (TPP), biphenyldiphenyl phosphate, tricresylphosphate (TCP), and the like. Examples of phthalic acid ester may include dimethyl phthalate (DMP), diethyl phthalate (DEP), dibutyl phthalate (DBP), dioctyl phthalate (DOP), diphenylphthalate (DPP), diethylhexyl phthalate (DEHP), and the like. Examples of citric acid ester may include o-acetyltriethyl citrate (OACTE), o-acetyltributyl citrate (OACTB), and the like. Examples of carboxylic acid ester may include butylate, methylacetyllysinate, dibutylsebacate, and various kinds of trimellitic acid ester. Preferably, phthalic acid ester (DMP, DEP, DBP, DOP, DPP, and DEHP) plasticizer may be used. The content of the plasticizer is used in 2~20 parts by weight, more preferably 5~15 parts by weight based on 100 parts by weight of cellulose acetate.

As the UV inhibitor, hydroxybenzophenone based compounds, benzotriazole based compounds, salicylic acid ester based compounds, cyanoacrylate based compounds, and the like may be used. The content of the UV inhibitor is used in 0.1~3 parts by weight, more preferably 0.5~2 parts by weight based on 100 parts by weight of cellulose acetate.

As the deterioration inhibitor, for example, an antioxidant, a peroxide decomposer, a radical inhibitor, a metal deactivator, a deoxidant, a photo-stabilizer (hindered amine or the like), or the like may be used. Particularly, preferable examples of the deterioration inhibitor may include butylated hydroxy toluene (BHT) and tribenzyl amine (TBA). The content of the deterioration inhibitor is used in 0.01~5 parts by weight, more preferably 0.1~1 parts by weight based on 100 parts by weight of cellulose acetate.

The fine particles are added in order to suppress the curl of the film; maintain transferability, prevent of attachment in a roll shape; or favorably maintain marring resistance. Any one selected from an inorganic compound, an organic compound, and the like may be used for the fine particles. For example, as the inorganic compound, a compound containing silicon, silicon dioxide, titanium dioxide, zinc oxide, aluminum oxide, barium oxide, zirconium oxide, strontium oxide, antimony oxide, tin oxide, tin oxide • antimony, calcium carbonate, talc, clay, calcined kaolin, calcined calcium silicate, calcium silicate hydrate, aluminum silicate, magnesium silicate, calcium phosphate, and the like are preferable, and the inorganic compound containing silicon, zirconium oxide, and the like are more preferably usable. The fine particles may have an average first particle size of 80**nm** or smaller, preferably 5 ~ 80**nm,** more preferably 5 ~ 60**nm,** and particularly preferably 8 ~ 50**nm.** If the average first particle size is above 80nm, surface leveling property of the film is damaged.

In addition, as necessary, an optical anisotropy regulator, a wavelength dispersion regulator, or the like may be added. These additives may be used without limitation as long as it is usually used in the art.

In addition, the present invention provides an optical film manufactured by using the composition for an optical film according to the present invention.

Then, a method for manufacturing the cellulose acetate film of the present invention will be described.

In the present invention, a cellulose acetate composition as follows, that is, a dope solution is prepared in order to prepare the cellulose acetate film.

The cellulose acetate composition may contain 1~15 parts by weight of the retardation improver of Chemical Formula 1 based on 100 parts by weight of cellulose acetate.

In the present invention, the solid concentration in the dope is favorably 15~25 wt%, preferably 16~23 wt%. If the solid concentration in the dope is below 15 wt%, fluidity thereof is too high to form the film. If the solid concentration is above 25 wt%, complete dissolution is difficult.

In the present invention, the cellulose acetate content is 70 wt% or higher, preferably 70 ~ 90 wt%, and more preferably 80 ~ 85 wt%, based on the total solid content. In addition, two or more kinds of cellulose acetate having different substitution degrees, polymerization degrees, or molecular distributions may be mixed and used.

The retardation additive is used in order to improve or deteriorate the retardation, and the retardation improver for improving the retardation is preferably used as the retardation additive of the present invention.

The retardation additive is preferably used in the range of 1~15 parts by weight based on 100 parts by weight of cellulose acetate. In the case where the retardation additive is used within the range above, the desired range of retardation may be achieved.

In the case where the film is manufactured by the solvent casting method, an organic solvent is preferable as a solvent for preparing the cellulose acetate composition (dope). Halogenated hydrocarbon is preferably used as an organic solvent. Examples of the halogenated hydrocarbon may include chlorinated hydrocarbon, methylene chloride, and chloroform, and among them, methylene chloride is most preferably used.

Alternatively, as necessary, the organic solvent besides halogenated hydrocarbon may be mixed therewith, and used. Examples of the organic solvent besides halogenated hydrocarbon may include ester, ketone, ether, alcohol, and hydrocarbon. As the ester, methylformate, ethylformate, propylformate, pentylformate, methylacetate, ethylacetate, pentylacetate, and the like may be used; as the ketone, acetone, methylethyl ketone, diethyl ketone, diisobutyl ketone, cyclopentanone, cyclohexanone, methylcyclohexanone, and the like may be used; as the ether, diisopropylether, dimethoxymethane, dimethoxyethane, 1,4-dioxane, 1,3-dioxolane, tetrahydrofuran, anisole, penetol, and the like may be used; as the alcohol, methanol, ethanol, 1-propanol, 2-propanol, 1-butanol, 2-butanol, t-butanol, 1-pentanol, 2-methyl-2-butanol, cyclohexanol, 2-fluoro-ethanol, 2,2,2-trifluoroethanol, 2,2,3,3-tetrafluoro-1-propanol, and the like may be used.

More preferably, methylene chloride may be used as a main solvent, and alcohol may be used as a sub-solvent. Specifically, methylene chloride and alcohol may be mixed in a weight ratio of 80:20 ~ 95:5, and then used.

The cellulose acetate composition may be prepared depending on a room-temperature, high-temperature, and low-temperature dissolution method.

The viscosity of the cellulose acetate composition is preferably 1 to 400 Pa • s, and more preferably 10 to 200 Pa • s, at 40°C.

The cellulose acetate film may be manufactured by the usual solvent casting method. More specifically, the prepared dope (cellulose acetate composition) is first stored in a storage, and bubbles contained in the dope are defoamed. The defoamed dope is sent to a pressurization type die through a pressurization type constant gear pump capable of sending a constant amount from a dope at high precision depending on the turn of revolutions. Then, the dope is uniformly casted on a metal supporter that is endlessly revolved from a mouthpiece (slit) of the pressurization type die, and then the half-dried casting film is exfoliated from the metal supporter at an exfoliation point where the metal supporter is almost revolved. The prepared web is transferred to a tenter while the width thereof is maintained by inserting both ends thereof into clips, followed by drying. Then, the resultant web is transferred to a roller of the drying unit, followed by drying, and then a predetermined length thereof is wound by using a winder. In addition, at the time of manufacturing the casting film, unilateral and bilateral stretching in mechanical and transverse directions may be possible while the amount of residual solvent is 10 ~ 40 wt%. In addition, after preparing the casting film, off-line stretching is also possible. The stretching degree is preferably in the range of 5~100%, more preferably 10~80%, and most preferably 20~50%.

At the time of solution coating, the space temperature is preferably -50°C to 50°C, more preferably -30°C to 40°C, and most preferably -20°C to 30°C. The cellulose acetate solution coated at a low space temperature is instantly cooled on the supporter, to thereby improve the gel strength, and thus, a film having a lot of organic solvent residual is obtained. Therefore, the film may be exfoliated from the supporter without evaporating the organic solvent from the cellulose acetate. As gas for cooling a space, ordinary air, nitrogen, argon, or helium may be used. The relative humidity is preferable 0 to 70%, and more preferably 0 to 50%.

The temperature of the supporter (casting part) on which the cellulose acetate solution is coated is preferably-50°C to 130°C, more preferably -30°C to 25°C, and most preferably -20°C to 15°C. The cooled gas may be introduced to the casting part in order to cool the casting part. A cooling apparatus may be disposed in the casting part to cool the space. At the time of cooling, it is important to be careful so as not to make water adhere onto the casting part. In the case of cooling by using the gas, it is preferable to dry the gas in advance.

In addition, as necessary, the cellulose acetate film may be surface-treated. The surface treatment, generally, is performed in order to improve adhesive property of the cellulose acetate film. As the surface treatment method, glow discharge treatment, ultraviolet irradiation treatment, corona treatment, flame treatment, saponification treatment, or the like may be employed.

The thickness of the cellulose acetate film is preferably in the range of 20 ~ 140 **μm,** and more preferably 40 ~ 100**μm**.

The optical film according to the present invention may be used in the polarizing plate, optical compensation sheet, optical filter for a three dimensional image, and the liquid crystal display, and one or two or more sheets thereof may be laminated and used. The liquid crystal display is preferably operated in a VA mode.

Hereinafter, the present invention will be in detail described in detail by the examples, but the present invention is not limited to the following examples.

Hereinafter, physical properties of the film were measured by the following methods.

1) Optical Anistropy

The Re value was measured by making the light of 550 nm enter in a normal direction of the film by using a birefringence measurement instrument (Axoscan, product name, manufactured from Axometrics, Inc.). The Rth value was obtained from the equation below by using three refractive index components of a refractive index ellipsoid, which are obtained by measuring the light of 550 nm, from 0 to 50 degrees at an interval of 10 degrees with respect to the normal direction of the film, using an in-plane slow axis as a tilt axis.

$$Rth=[(n_x+n_y)/2-n_z] \times d$$

$n_x$: larger refractive index between two refractive indexes in a plane
$n_y$: smaller refractive index between two refractive indexes in a plane
$n_z$: refractive index in a thickness direction
d: thickness of the film

[Preparation Example] Synthesis of Retardation Additive

((E)-2-(2-hydroxybenzylidene)-N-methylhydrazinecarbothioamide

2-Hydroxy benzyl aldehyde (10 g, 81.9 mmol) was added to 300 mL of ethanol, and N-methylhydrazinecarbothioamide (8.61 g, 81.9 mmol) was added thereto, followed by stirring at room temperature for 18 hours. The solid compound generated during the reaction was filtered, and then washed with a small amount of ethanol solution, followed by drying, to obtain a title compound (15.3g, yield 89%).

[Example 1]

Preparation of Cellulose Acetate Composition (Dope)

The compositional components below were put into a stirrer, and dissolved at a temperature of 30°C.
Among the compositional components below, 2-(2H-Benzotriazol-2-yl)-6-(1-methyl-1-phenylethyl)-4-(1,1,3,3-tetramethylbutyl)phenol was used as a UV inhibitor.
Cellulose acetate particle having a substitution degree of 2.87 100 parts by weight

| | |
|---|---|
| Compound 1 | 10 parts by weight |
| UV inhibitor | 2 parts by weight |
| Silicon dioxide, average particle size 16 nm | 0.5 parts by weight |
| Methylene chloride | 440 parts by weight |
| Methanol | 50 parts by weight |

The obtained dope was warmed to 30°C, transferred to a gear pump, filtered by a filter bed having an absolute filtering precision of 0.01 mm, and then again filtered by a cartridge filtering apparatus having an absolute filtering precision of 5$\mu$**m.**

Manufacture of Cellulose Ester Film

The dope obtained through the filtering processes was casted on a polished stainless supporter through a casting die, and then exfoliated. The amount of residual solvent at the time of exfoliation was controlled to be 20 wt%. After connection to a tenter, the film was stretched by 102% in a width direction thereof. After the film was removed from the tenter, right and left-sided ends of the film were removed by 150 mm, respectively. The film having removed ends was dried by a drier. Both ends of the film come out of the drier were cut off by 3 cm, respectively. Then, the film was subjected to a knurling process to have a 100 $\mu$m-height knurling on a portion of the film which is distanced at 10 mm from the ends thereof, and wound in a role type. Optical anisotropy of the obtained specimen was measured by the method as described above, and the measurement results were tabulated in Table 1.

[Examples 2 to 18]

Each film was manufactured by the same method as Example 1 except that the kind of compound was changed as shown in Table 1 below instead of Compound 1 of Chemical Formula 1, and optical anisotropy thereof was measured and then the measurement results were tabulated in Table 1.

[Example 19]

Preparation of Cellulose Acetate Composition (Dope)

The composition below was put into a stirrer, and dissolved at a temperature of 30°C.
Among the compositional components below, 2-(2H-Benzotriazol-2-yl)-6-(1-methyl-1-phenylethyl)-4-(1,1,3,3-tetramethylbutyl)phenol was used as a UV inhibitor.
Cellulose acetate particle having a substitution degree of 2.87 100 parts by weight

| | |
|---|---|
| Compound 19 | 5 parts by weight |
| UV inhibitor | 2 parts by weight |
| Silicon dioxide, average particle size 16 nm | 0.5 parts by weight |
| Methylene chloride | 277 parts by weight |
| Methanol | 24 parts by weight |

The obtained dope was warmed to 30°C, transferred to a gear pump, filtered by a filter bed having an absolute filtering precision of 0.01 mm, and then again filtered by a cartridge filtering apparatus having an absolute filtering precision of 5$\mu$**m.**

Manufacture of Cellulose Ester Film

The dope obtained through the filtering processes was casted on a glass supporter through a casting die, and then dried at room temperature for 7 minutes, followed by exfoliation. Again, the exfoliated material was dried at 140 °C for 60 minutes, so that the amount of residual solvent was controlled to be 0.5 wt% or lower. After connection to a tenter, the film was stretched by 102% in a width direction thereof. After the film was removed from the tenter, right and left-sided ends of the film were removed by 150 mm, respectively. The film having removed ends was dried by a drier. Both ends of the film come out of the drier were cut off by 3 cm, respectively. Then, the film was subjected to a knurling process to have a 100 $\mu$m-height knurling on a portion of the film which is distanced at 10 mm from the ends thereof, and then wound in a roll type. Optical anisotropy was measured with respect to the obtained specimen by the method as described above, and the measurement results were tabulated in Table 1.

[Example 20]

The film was manufactured by the same method as Example 19 except that Compound 20 was used instead of the retardation additive of Example 19, and optical anisotropy thereof was measured and then the measurement results were tabulated in Table 1.

[Examples 21 to 26]

Respective films were manufactured by the same method as Example 19 except that Compounds 21 to 26 were used instead of the retardation additive described in Table 1 of Example 19 and the amounts thereof were used in 10 parts by weight, and optical anisotropy thereof was measured and then the measurement results were tabulated in Table 1.

[Comparative Example 1]

The cellulose acetate film was manufactured by the same method as Example 1 except that the dope was prepared without addition of the retardation additive of Example 1, and optical anisotropy thereof was measured by the method as described above and the measurement results were tabulated in Table 1.

[Comparative Example 2]

The cellulose acetate film was manufactured by the same method as Example 1 except that the dope was prepared without addition of the retardation additive of Example 19, and optical anisotropy thereof was measured by the method as described above and the measurement results were tabulated in Tables 1.

[Table 1]

| | Compound | Thickness ($\mu$m) | Re (nm) | Rth (nm) | Rth(700)/ Rth(550) |
|---|---|---|---|---|---|
| Example 1 | 1 | 40 | 0.33 | 208.28 | 1.03 |
| Example 2 | 2 | 40 | 1.26 | 140.15 | 1.02 |
| Example 3 | 3 | 40 | 0.80 | 103.15 | 1.00 |
| Example 4 | 4 | 40 | 2.66 | 92.07 | 1.01 |
| Example 5 | 5 | 40 | 1.56 | 180.20 | 1.03 |
| Example 6 | 6 | 40 | 6.20 | 146.58 | 1.02 |
| Example 7 | 7 | 40 | 1.54 | 58.77 | 1.05 |
| Example 8 | 8 | 40 | 1.02 | 190.11 | 1.03 |
| Example 9 | 9 | 40 | 4.91 | 160.89 | 1.02 |
| Example 10 | 10 | 40 | 0.53 | 155.83 | 1.02 |
| Example 11 | 11 | 40 | 7.1 | 164.6 | 1.02 |
| Example 12 | 12 | 40 | 9.2 | 127.7 | 1.01 |
| Example 13 | 13 | 40 | 2.52 | 143.02 | 1.03 |
| Example 14 | 14 | 40 | 1.45 | 120.72 | 1.00 |
| Example 15 | 15 | 40 | 1.35 | 85.52 | 1.04 |
| Example 16 | 16 | 40 | 0.13 | 70.22 | 1.01 |
| Example 17 | 17 | 40 | 1.11 | 59.90 | 1.04 |
| Example 18 | 18 | 40 | 1.24 | 44.97 | 1.05 |
| Example 19 | 19 | 40 | 1.73 | 113.6 | - |
| Example 20 | 20 | 40 | 2.85 | 168.25 | - |
| Example 21 | 21 | 40 | 1.48 | 97.85 | - |
| Example 22 | 22 | 40 | 0.69 | 85.94 | - |
| Example 23 | 23 | 40 | 2.41 | 62.45 | - |
| Example 24 | 24 | 40 | 9.83 | 168.93 | - |
| Example 25 | 25 | 40 | 0.52 | 138.39 | - |
| Example 26 | 26 | 40 | 0.77 | 118.36 | - |
| Comparative Example 1 | - | 40 | - | 28.2 | - |
| Comparative Example 2 | - | 40 | - | 32.4 | - |

As shown in Table 1, it can be confirmed that when the retardation additive described in the examples is inputted unlike the existing plasticizer, the obtained film had a high Rth value.

## Claims

**1.** An optical film comprising at least one additive selected from compounds of Chemical Formula 1 below:

[Chemical Formula 1]

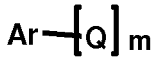

in Chemical Formula 1,

Ar is (C6-C20)aryl or (C3-C20)heteroaryl, provided that OR (here, R is hydrogen or (C1-C10)alkyl) is substituted at least one ortho position of Q;
Q is

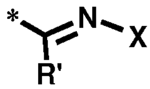;

R' is hydrogen or (C1-C10)alkyl;
X is

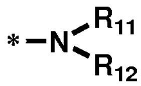, 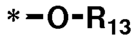 or 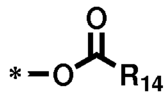;

$R_{11}$, $R_{12}$, $R_{13}$, and $R_{14}$ each are independently hydrogen, (C1-C10)alkyl, (C1-C10)alkylcarbonyl, or

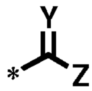;

$R_{11}$ and $R_{12}$ may be linked to each other via substituted or unsubstituted (C4- C10)alkylene to thereby form a ring; the alkylene may be further substituted with (C1-C7)alkyl; at least one of carbon atoms of the alkylene may be further substituted with at least one heteroatom selected from N, O, and S;
Y is O or S; Z is hydrogen,

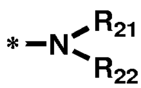, 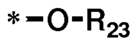, or 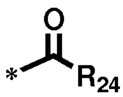;

$R_{21}$, $R_{22}$, $R_{23}$ and $R_{24}$ each are independently hydrogen, (C1-C10)alkyl, (C3-C20)cycloalkyl, or amino group; $R_{21}$ and $R_{22}$ may be linked to each other via (C3-C10)alkylene substituted or unsubstituted with (C1-C7)alkyl to thereby form a ring; and at least one of carbon atoms of the alkylene may be further substituted with at least one heteroatom selected from N, O, and S;
Ar may be further substituted with at least one selected from (C1-C7)alkyl, (C1-C7)alkoxy, (C3-C20)cycloalkyl, (C1-C7)alkylcarbonyl, (C3-C20)cyclocarbonyl, (Cl-C7)alkylsulfanyl, (C3-C20)cyclosulfanyl, (Cl-C7)alkylsulfinyl, (C3-C20)cyclosulfinyl, (Cl-C7)alkylsulfonyl, (C3-C20)cyclosulfonyl, (C1-C7)alkylcarbonylimine, (C3-C20)cycloalkylcarbonylimine, (C1-C7)alkylsulfanylimine, (C3-C20)cycloalkylsulfanylimine, halogen, nitro, cyano, hydroxy, amino, (C2-C7)alkenyl, (C3-C20)cycloalkyl, and 5- to 7- membered heterocycloalkyl including at least one atom selected from N, O, and S; and
m is an integer of 1 to 10.

**2.** The optical film of claim 1, wherein the compound of Chemical Formula 1 is represented by a compound of Chemical Formula 2 below:

[Chemical Formula 2]

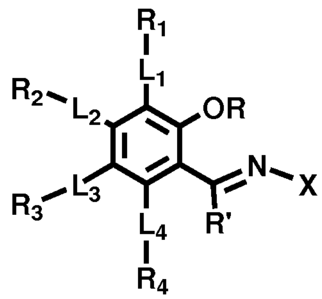

in Chemical Formula 1,

$L_1$ to $L_4$ each are independently a single bond, or selected from N, O, S, C=O, S=O, O=S=O, -NH-C(O)-, and -NH-C(S)-;
$R_1$ to $R_4$ each are independently hydrogen, (C1-C10)alkyl,
(C1-C10)alkoxy, (C3-C20)cycloalkyl,

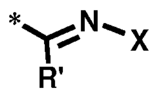

or 5- to 7-membered heterocycloalkyl including at least one atom selected from N, O, and S;
R and R' each are independently hydrogen or (C1-C10)alkyl;
X is

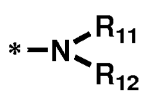 , 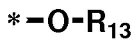 , or 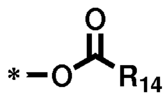 ;

$R_{11}$, $R_{12}$, $R_{13}$, and $R_{14}$ each are independently hydrogen, (C1-C10)alkyl, (C1-C10)alkylcarbonyl, or

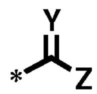 ;

$R_{11}$ and $R_{12}$ may be linked to each other via substituted or unsubstituted (C4-C10)alkylene to thereby form a ring; the alkylene may be further substituted with (C1-C7)alkyl; and at least one of the carbon atoms of the alkylene may be further substituted with at least one heteroatom selected from N, O, and S;
Y is O or S;
Z is hydrogen,

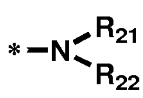 , 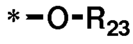 , or 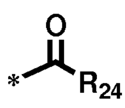 ;

$R_{21}$, $R_{22}$, $R_{23}$ and $R_{24}$ each are independently hydrogen, (C1-C10)alkyl, (C3-C20)cycloalkyl, or amine group;
$R_{21}$ and $R_{22}$ may be linked to each other via (C3-C10)alkylene substituted or unsubstituted with (C1-C7)alkyl to thereby form a ring; and at least one of carbon atoms of the alkylene may be further substituted with at least one heteroatom selected from N, O, and S;
alkyl, alkoxy, cycloalkyl, and heterocycloalkyl of $R_1$ to $R_4$ and alkyl of R and R' may be further substituted with

at least one selected from (C1-C7)alkyl, halogen, nitro, cyano, hydroxy, amino, (C2-C7)alkenyl, (C3-C20)cycloalkyl, and 5- to 7- membered heterocycloalkyl including at least one selected from N, O, and S; and $R_1$ to $R_4$ each may be linked to an adjacent substituent via (C3-C10)alkylene substituted or unsubstituted with (C1-C7)alkyl to thereby form an aliphatic ring.

3. The optical film of claim 2, wherein Chemical Formula 2 is represented by any one of Chemical Formulas 3 to 6 below:

[Chemical Formula 3]

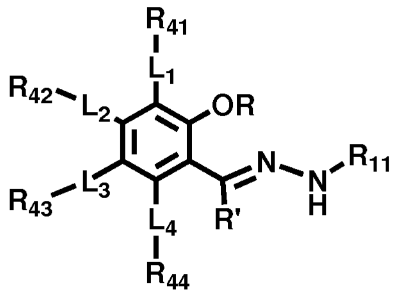

[Chemical Formula 4]

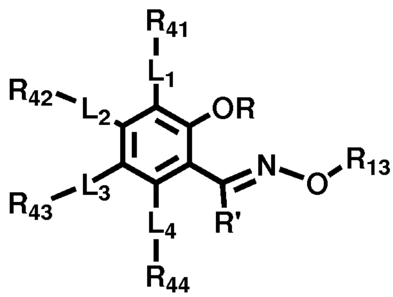

[Chemical Formula 5]

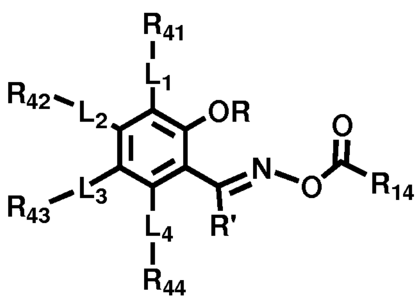

[Chemical Formula 6]

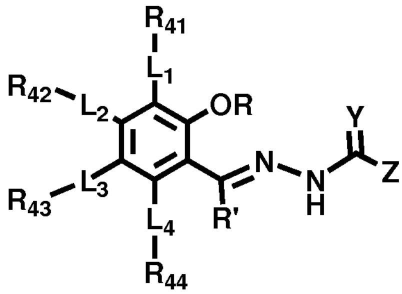

in Chemical formulas 2 to 5,

$L_1$ to $L_4$ each are independently a single bond, or selected from N, O, S, C=O, S=O, O=S=O, -NH-C(O)-, and -NH-C(S)-;
$R_{41}$ to $R_{44}$ each are independently hydrogen, (C1-C10)alkyl, (C1-C10)alkoxy, (C3-C20)cycloalkyl, (C2-C7)alkenyl,

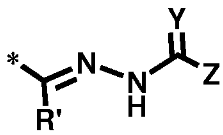

,

or 5- to 7- membered heterocycloalkyl including at least one atom selected from N, O, and S;
Y is O or S;
Z is hydrogen,

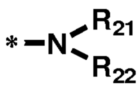

, 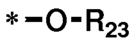 or 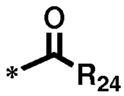 ;

$R_{21}$, $R_{22}$, $R_{23}$, and $R_{24}$ each are independently hydrogen, (C1-C10)alkyl, (C3-C20)cycloalkyl, or amino group; $R_{21}$ and $R_{22}$ may be linked to each other via (C3-C10)alkylene substituted or unsubstituted with (C1-C7)alkyl to thereby form a ring; and at least one of carbon atoms of the alkylene may be further substituted with at least one heteroatom selected from N, O, and S;
R and R' each are independently hydrogen or (C1-C10)alkyl; and
alkyl, alkoxy, cycloalkyl, alkenyl, and heterocycloalkyl of $R_{41}$ to $R_{44}$ and alkyl of R and R' may be further substituted with at least one selected from (C1-C7)alkyl, halogen, nitro, cyano, hydroxy, amino, (C2-C7)alkenyl, (C3-C20)cycloalkyl, and 5- to 7- membered heterocycloalkyl including at least one selected from N, O, and S.

**4.** The optical film of claim 3, wherein

$L_1$ to $L_4$ each are independently a single bond, or selected from O and C=O;
$R_{41}$ to $R_{44}$ each are independently hydrogen, (C1-C10)alkyl,
(C1-C10)alkoxy, or

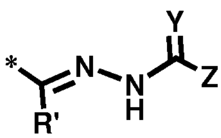

;

Y is O or S;
Z is hydrogen,

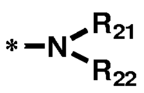, $*-O-R_{23}$ or 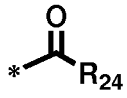;

R' is hydrogen or (C1-C10)alkyl;
$R_{21}$, $R_{22}$, $R_{23}$, and $R_{24}$ each are independently hydrogen, (C1-C10)alkyl, (C3-C20)cycloalkyl, or amino group; $R_{21}$ and $R_{22}$ may be linked to each other via (C3-C10)alkylene substituted or unsubstituted with (C1-C7)alkyl to thereby form a ring; and at least one of carbon atoms of the alkylene may be further substituted with at least one heteroatom selected from N, O, and S; and
$R_5$ is selected from hydrogen and (C1-C10)alkyl.

**5.** The optical film of claim 1, wherein the compound of Chemical Formula 1 is selected from the structures below:

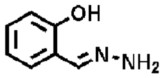 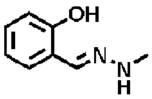 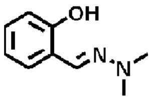 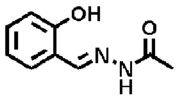 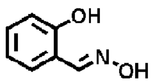 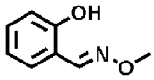

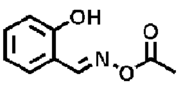 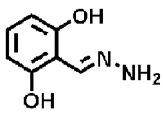 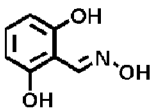 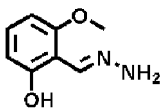 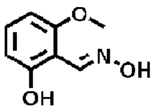 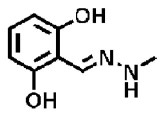

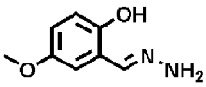 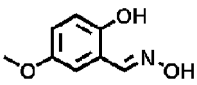 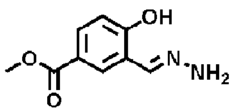 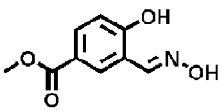 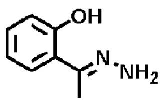

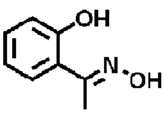 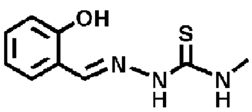 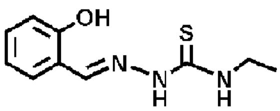 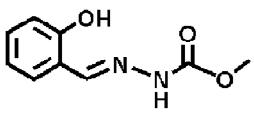

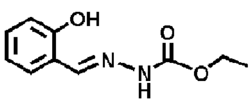 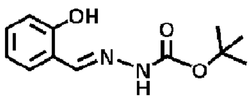 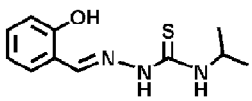 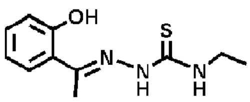

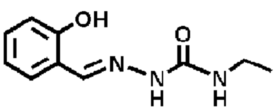 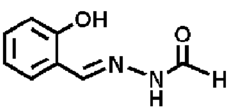 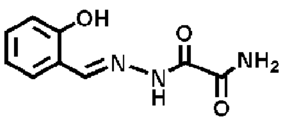 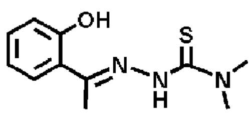

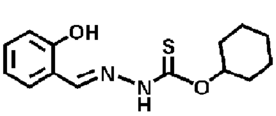 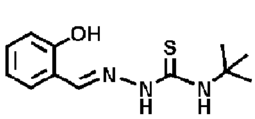 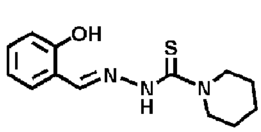 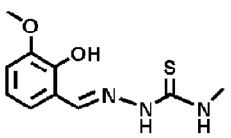

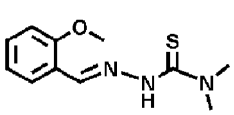
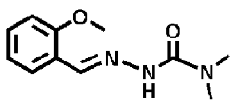
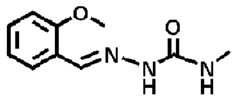
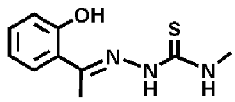
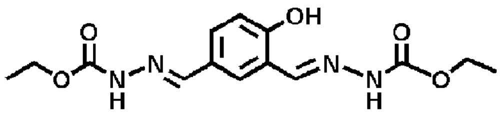
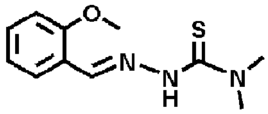
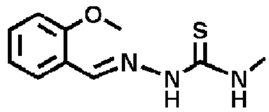
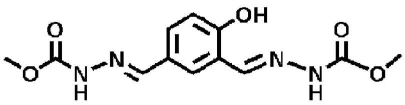
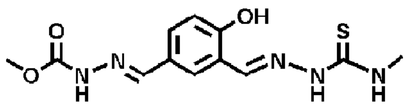
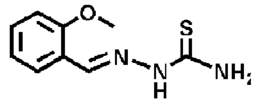
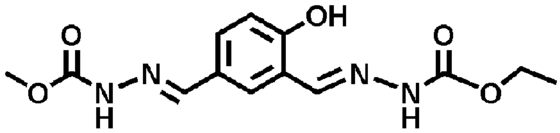
.

6. An optical film comprising an aromatic ring including at least two substituents, wherein at least two substituents includes a compound of forming intramolecular hydrogen bonding.

7. The optical film of claim 1, wherein the compound forms an analogous aromatic ring by intramolecular hydrogen bonding.

8. The optical film of claim 1, wherein it has Rth(λ) satisfying Formulas (I) and (II) below:

$$\text{(I)}\ 50 \leq Rth(550) \leq 500$$

$$\text{(II)}\ Rth(700)/Rth(550) > 1.0$$

in formulas above, Rth(λ) is a retardation value (unit: nm) in a thickness direction of the film at a wavelength, λnm.

9. The optical film of any one of claims 1 to 8, wherein it is a cellulose acetate film.

10. A composition for an optical film comprising, as a retardation additive, at least one selected from compounds of Chemical Formula 1 below in 1~15 parts by weight based on 100 parts by weight of a base resin:

[Chemical Formula 1]

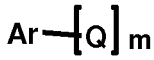

in Chemical Formula 1,

Ar is (C6-C20)aryl or (C3-C20)heteroaryl, provided that OR (here, R is hydrogen or (C1-C10)alkyl) is substituted at least one ortho position of Q;
Q is

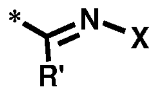 ;

R’ is hydrogen or (C1-C10)alkyl;
X is

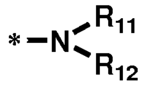, 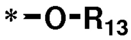, or 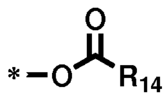 ;

$R_{11}$, $R_{12}$, $R_{13}$ and $R_{14}$ each are independently hydrogen, (C1-C10)alkyl, (C1-C10)alkylcarbonyl, or; $R_{11}$ and $R_{12}$ may be linked to each other via substituted or unsubstituted (C4-C10)alkylene to thereby form a ring; the alkylene may be further substituted with (C1-C7)alkyl; and at least one of the carbon atoms of the alkylene may be further substituted with at least one heteroatom selected from N, O, and S;
Y is O or S;
Z is hydrogen,

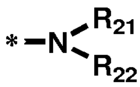, 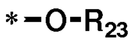, or 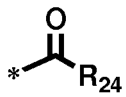 ;

$R_{21}$, $R_{22}$, $R_{23}$ and $R_{24}$ each are independently hydrogen, (C1-C10)alkyl, (C3-C20)cycloalkyl, or amino group; $R_{21}$ and $R_{22}$ may be linked to each other via (C3-C10)alkylene substituted or unsubstituted with (C1-C7)alkyl to thereby form a ring; and at least one of carbon atoms of the alkylene may be further substituted with at least one heteroatom selected from N, O, and S;
Ar may be further substituted with at least one selected from (C1-C7)alkyl, (C1-C7)alkoxy, (C3-C20)cycloalkyl, (C1-C7)alkylcarbonyl, (C3-C20)cyclocarbonyl, (Cl-C7)alkylsulfanyl, (C3-C20)cyclosulfanyl, (Cl-C7)alkylsulfinyl, (C3-C20)cyclosulfinyl, (Cl-C7)alkylsulfonyl, (C3-C20)cyclosulfonyl, (C1-C7)alkylcarbonylimine, (C3-C20)cycloalkylcarbonylimine, (C1-C7)alkylsulfanylimine, (C3-C20)cycloalkylsulfanylimine, halogen, nitro, cyano, hydroxy, amino, (C2-C7)alkenyl, (C3-C20)cycloalkyl, and 5- to 7- membered heterocycloalkyl including at least one atom selected from N, O, and S; and
m is an integer of 1 to 10.

**11.** The composition of claim 10, further comprising any one or two or more additives selected from a UV inhibitor, fine particles, a plasticizer, a deterioration inhibitor, a stripping agent, an infrared absorber, and an optically anisotropic controller.

**12.** An optical film manufactured by using the composition for an optical film of claim 10 or 11.

**13.** The optical film of any one of claims 1 to 8, wherein it is used in an optical compensation sheet, an optical filter for a three dimensional image, a polarizing plate, and a liquid crystal display.

**14.** A display device comprising the optical film of any one of claims 1 to 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080173215 A
- KR 20110075980
- US 20100208181 A